# EUROPEAN PATENT APPLICATION

(11) **EP 2 367 357 A2**
(43) Date of publication of application: **21.09.2011**
(21) Application number: 11158735.8
(22) Date of filing: 17.03.2011
(51) Int. Cl.: H04N 7/26, H04N 7/36, H04N 7/50

(54) **Adaptive search area in motion estimation processes**

(30) Priority: 18.03.2010 US 726464
(71) Applicant: Ceva D.S.P. Ltd., 46120 Herzlia Pituach (IL)
(72) Inventor: Nusboim, Amir, 49205, Peteh-Tikva (IL); Shlezinger, Alex, Ganie Tiqva (IL); Sadeh, Roni, 44446, Kfar Saba (IL)
(74) Representative: Hutchinson, Glenn Stanley

(57) **Abstract**

Embodiments of the invention are directed to a system and method for dynamically defining a search area in a previously-coded reference picture during motion estimation in video encoding. The method includes receiving a sequence of pictures that are divided into a plurality of digital data blocks and defining for a currently-coded data block of a currently coded-picture, a search area within a previously-coded reference picture based on one or more search areas associated with previously-coded data blocks of the currently-coded picture, for example the left data block and the upper data block and further on a search area associated with a previously-coded data block of the reference picture that is co-positioned with the currently coded data block.

## Description

### BACKGROUND

Digital video compression or encoding may be used in a variety of implementations, such as broadcasting, streaming and storage of a video stream. In a stream of digital images, redundancy in a sequence of the images may occur when the appearance of a given picture or frame is similar to that of a previous or subsequent picture in the sequence. Many compression techniques take advantage of this redundancy by expressing the differences of a current region in the picture to a reference region in a previous or subsequent picture in the sequence. In particular, when the same object occurs in both regions, but at different locations within the picture, the change in location may be encoded as a motion vector. Various video compression standards and methods may include motion estimation processes for determining the motion vectors.

Usually the picture is divided into blocks. In such cases, motion estimation is the process of finding a block in a reference picture that bests matches the current block presently being encoded in the current picture. Usually, the search for the best matched block is not performed in the entire reference picture since such a search may consume intensive computation power, time and bandwidth. Instead, the search is limited to a particular search area within the reference picture in which the best matched block will most probably be found. The search area is usually at a fixed size, which could limit the range of motion that would benefit from the motion estimation methods. Enlarging, the search area size, however, may consume too much computation time and bandwidth.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

Fig. 1 is a block diagram of an exemplary video encoder according to embodiments of the present invention;

Fig. 2 is an illustration showing macro blocks in a currently coded picture and a reference picture block diagram helpful in demonstrating embodiments of the present invention;

Fig. 3 is an illustration of an exemplary search area helpful in demonstrating embodiments of the present invention;

Fig. 4 is a flowchart of a method for video processing using an adaptive search range during motion estimation according to embodiments of the present invention; and

Figs. 5A-5D are illustrations of exemplary search areas defined according to embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF DEMONSTRATIVE EMBODIMETS

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like.

Embodiments of the invention are directed to video encoding and estimation of motion vectors for a block of pixels in a sequence of digital images (a video stream). The motion vector indicates the location of the current block in a current picture relative to its location in a reference picture. The reference picture may be a previous picture or a subsequent picture in the sequence. Although the method are described as applies to exemplary blocks of 16x16 pixels, it should be clear to one of ordinary skill in the art that the methods may be applied to blocks of a different size.

Embodiments of the invention may include the use of dynamic or adaptive search ranges in the motion estimation process instead of using a static search area having a predefined size. Applying an adaptive search range approach according to embodiments of the invention may enable to use smaller search areas for certain blocks without affecting accuracy. Accordingly, using this prediction may enable to calculate longer possible motion vectors while reducing the total size of the search area so that additional memory and bandwidth resources are not required.

According to embodiments of the invention, using a dynamic search range may enable to predict the direction of motion vectors and to enlarge the search area in the predicted direction by decreasing the search area in the opposite direction. According to embodiments of the invention using an adaptive search range methods, the total size or area of the reference box may be reduced but longer motion vectors may be possible relative to conventional methods. For example, according to embodiments of the invention, the maximal possible size of a motion vector may be lengthen by up to approximately 200% relative the motion vectors associated with static search range methods and the bandwidth may be reduced up to approximately 50%.

Methods according to some embodiments of the present invention may be performed by any suitable computing unit including but not limited to the central processing unit of a computer, a processor, a digital signal processor dedicated hardware, or any combination of the above. Software code representing methods according to embodiments of the invention may be stored in memory accessible by the computing unit.

An apparatus comprising a computing unit to perform methods according to embodiments of the invention may be part of a data compression encoder or transcoder. Although the scope of the invention is not limited in this respect, the encoder or transcoder may be part of any of the following products: a digital video camera, a set-top box, a cellular telephone equipped with a camera, a personal digital assistant (PDA), a game-console and others.

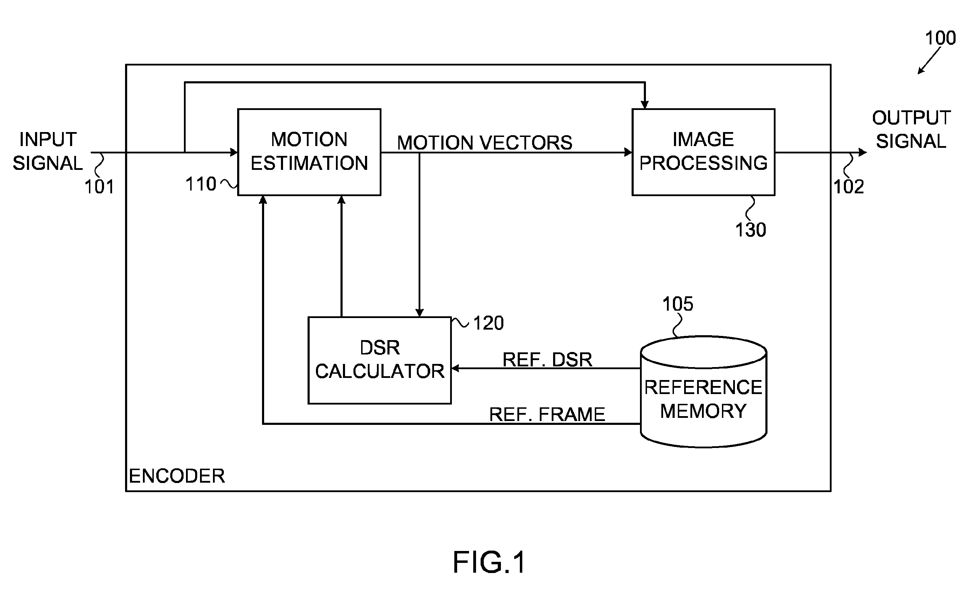

Reference is now made to Fig. 1, which is a block diagram of an exemplary video encoder according to embodiments of the present invention. An exemplary video encoder 100 may receive an input video stream 101 and may output an encoded video stream 102. Encoder 100 may include a motion estimation unit 110, a dynamic search range (DSR) calculator 120, an image processing unit 130 and a reference-frame memory 105. Encoder 100 may perform video processing according to any video standard, such as, for example, MPEG-2, MPEG-4, H.264 or any other video standard. Motion estimation unit 110 may calculate motion vectors (MV's) and may perform motion estimation calculations.

A motion vector may represent a transformation from an image or frame received from input video stream 101 to another image or frame, for example, a reference frame previously received from stream 101. The reference frame may be stored, for example, in reference-frame memory 105. A frame may be divided into blocks, also referred to herein as macro blocks (MB) or data blocks. Each macro block may include a group of pixels, for example, 16x16 pixels. Two or more macro blocks may define a search area. A search area within a frame is also referred to herein as a "search window" or "reference box".

Motion estimation block 110 may search and locate, within a defined search area of a reference frame stored in reference memory, a block that is most similar to a particular macro block in a source frame or a currently coded frame. The macro block in the reference frame that is found to be most similar to the particular macro block in the source frame is the "best matching block" or a "match". When a match is found, a motion estimation algorithm carried out by motion estimation block 110 may assign one or more motion vectors describing the location of the macro block in the currently coded frame relative to the location of the best matching block (reference block) in the reference frame. The motion vectors describe the size and direction of the motion (for example, horizontally and/or vertically) or the differences between the relative location of a macro block in the source frame and the matching macro block in the reference frame.

According to embodiments of the invention, the search area within the reference frame, in which the best matching block is searched for, may be defined or re-calculated for each macro block. The parameters defining the size and location of the search area within the reference frame may be calculated in DSR calculator 120 based on data from previously processed macro blocks, as detailed herein.

According to embodiments of the invention, for each macro block in the currently coded frame, the dynamic search area and search range within the reference frame may be calculated based on knowledge of previously calculated search areas and motion vectors calculated for one or more adjacent macro blocks in the currently coded frame and for a co-positioned reference block in the reference frame. According to other embodiments the search range may be calculate based on search areas and motion vectors calculated for one or more adjacent macro blocks in the currently coded frame and for one or more pre-determined macro blocks in the reference frame. DSR calculator 120 may receive parameters pertaining to previously calculated motion vectors from motion estimation block 110 and parameters pertaining to the reference frame and the previously calculated search areas from reference memory 105.

DSR calculator 120 may dynamically calculate, define or determine the search area for a particular macro block. The dynamic search area may enable calculating longer motion vectors relative to conventional methods that use a static predefined search area for all macro blocks by enlarging the search range in a first desired direction while reducing the search range in a second opposite direction. DSR calculator 120 may predict with relatively high accuracy the direction of a motion between two consecutive frames and may use this information to enlarge the search area in that direction while decreasing the search area in the opposite direction. According to embodiments of the invention, at the end of the process of defining, adapting or updating the search area within a reference frame for a certain macro block in the currently coded frame, the total size of the search area may be decreased, increased or kept unchanged relative to a previously calculated macro block, as detailed herein.

Motion estimation block 110 and DSR calculator 120 may include or may be coupled to a memory unit able to store or save results of computational operations performed by those blocks. Such a memory unit may save the computational results of motion estimation block 110 and/or DSR calculator 120 in any form or method, for example, in a table form, as a list or in any other way. The memory may further store instructions to perform the methods described herein. Encoder 100 may further include one or more memory units including any computer-storage medium to store thereon instructions that use the results of the preprocessing algorithm during real-time encoding.

Image processing block 130 may perform various encoding functions or operations. In the exemplary illustration of Fig. 1, image processing block 130 may perform any operation, function or method which may be a part of the encoding process for example, Discrete Cosine Transform (DCT), quantization, entropy coding or any other function, calculation or process, however, it should be understood to a person skilled in art that the invention is not limited in this respect and according to embodiments of the present invention any number and any kind of blocks, units and/or modules may be included in encoder 100 and may be a part of the encoding process. Encoder 100 may further include other blocks, modules, operations and units.

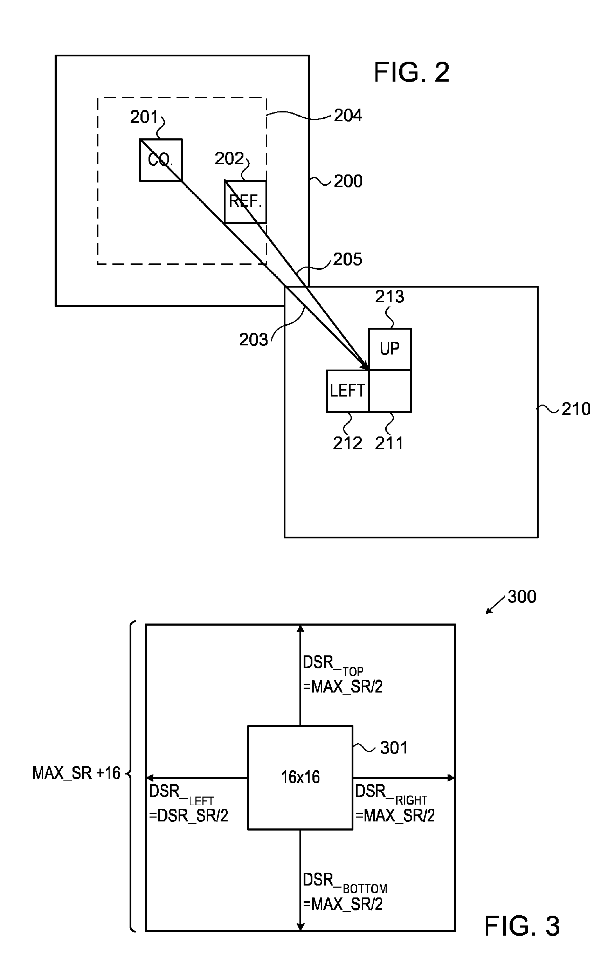

Reference is now made to Fig. 2, which shows an exemplary illustration of a reference picture or frame 200 and a currently-coded or source frame 210. Source picture 210 includes a current macro block 211 which is currently coded, a left block 212 and an upper or top block 213, both were previously coded and whose motion vectors were previously determined. Reference picture 200 includes a co-positioned reference block 201 and a reference block 202. Co-positioned reference block 201 may be located within reference picture 200 at the same location as current block 211 in current picture 210. In this case, a motion vector 203 from macro block 201 at reference picture 200 to current macro block 211 would be a (0, 0) vector. Although the motion vector is illustrated in Fig. 2 as being from a top-left corner of a block within reference picture 200 to the top-left corner of a block with the currently coded picture 210, any other self-consisting definitions for motion vector may be used.

Fig. 2 further demonstrates an exemplary search area or reference box 204 that was chosen for current macro block 211 around co-positioned reference block 201. By performing a search within search area 204, a match may be found and identified as reference block 202. Accordingly, the motion vector for current block 211 would be motion vector 205.

Fig. 3 is an illustration of an exemplary search area, helpful in understanding embodiments of the invention. Fig. 3 shows an exemplary search area 300, which in an area of 48x48 pixels that includes a central co-positioned macro block 301 having 16x16 pixels. The central block 301 may be, for example, co-positioned block 201 located at the same location in a reference picture as the location of a current block, such as 211, in a current picture. It should be clear to person skilled in the art that the search area is an example only and search areas of different sizes are also within the scope of the invention, including an exemplary search area of 80x80 pixels or an exemplary search area of 56x56 pixels. Typically, but not necessarily, the search may start from the top-left corner advancing in pixel jumps to the right and to the bottom.

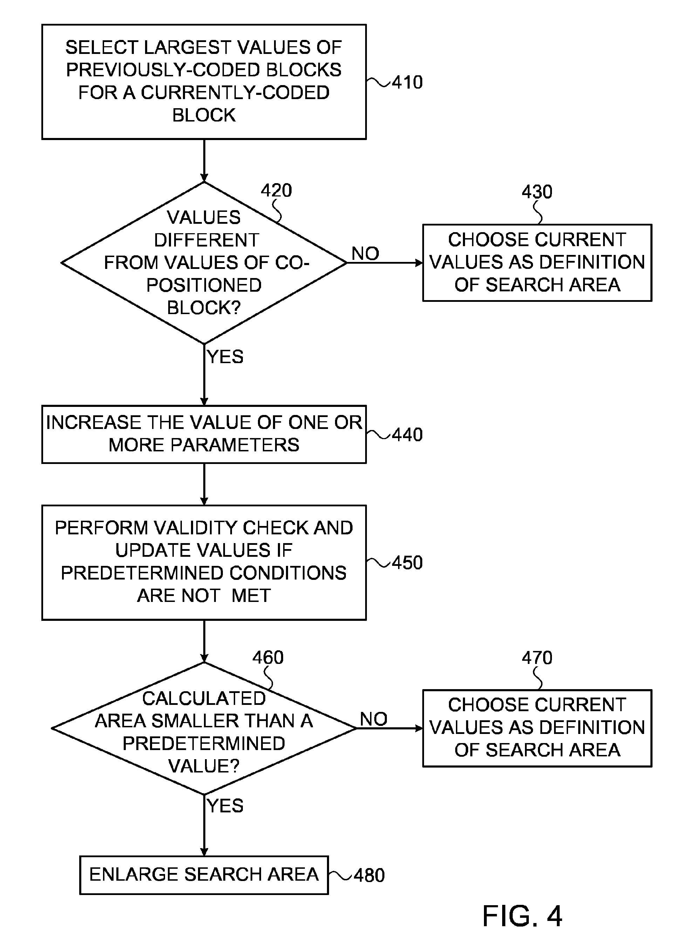

According to embodiments of the invention, a method for dynamically defining search areas during motion estimation in a video encoding device is provided. The method as detailed herein with respect to Fig. 4 may include receiving a sequence of pictures, each comprising a plurality of digital data blocks and then, defining for a currently-coded data block of a currently coded-picture, a search area within a previously-coded reference picture based on one or more search areas associated with previously-coded data blocks of the currently-coded picture and on a search area associated with a previously-coded data block of the reference picture that is co-positioned with the currently coded data block.

Reference is now made to Fig. 4, which is a flowchart of a method for dynamically choosing adaptive search areas during a motion estimation process of a video stream according to embodiments of the invention. Operations of the method may be implemented by, for example, DSR calculator 120 and motion estimation block 110 of encoder 100 of Fig. 1 and/or by any other suitable units, devices, and/or systems. According to embodiments of the invention, an initial search area may be defined as a default search area to be used, for example, at the beginning of the motion estimation process of a frame.

An exemplary initial search area may be search area 300, which is a square reference box of 48x48 pixels, where the length of the edge of search area 300 is defined as MAX_SR+16. The total area of reference box 300 is then (MAX_SR+16)*(MAX_SR+16) = (32+16)*(32+16).

A search area may be represents by four direction or search range parameters DSR top, DSR bottom, DSR left and DSR right. DSR top represents the distance between a top edge of a co-positioned block and a top edge of the search area; DSR bottom represents the distance between a bottom edge of the co-positioned block and a bottom edge of the search area; DSR left represents the distance between a left edge of the co-positioned block and a left edge of the search area; and DSR right represents the distance between a right edge of the co-positioned block and a right edge of the search area.

Each of these parameters cannot exceed a maximal value of MAX_SR. Further, the sum of the two vertical parameters, DSR top, DSR bottom, also referred to as the "vertical search range" cannot exceed the maximal value of MAX_SR. Likewise, the sum of the two horizontal parameters DSR top, DSR bottom, also referred to as the "horizontal search range", cannot exceed the maximal value of MAX_SR.

The values may be defined to further indicate the direction. Accordingly, optionally, a pair of perpendicular parameters, for example, the vertical parameter DSR top and the horizontal parameter DSR left may receive only negative values to represent the top and left directions while the other pair, namely, the vertical parameter DSR bottom and the horizontal parameter DSR right may only receive positive values to represent the opposite bottom and right directions.

As initially the co-positioned reference block is located at the center of the search area, the distances between each of the four edges of the co-positioned reference block and a respective edge of the search area are equal to MAx_SR/2. The initial values defining the initial search area may be stored or saved in a dedicated memory or storage unit. The initial values may be saved in a special configuration file that may be used by a processor, e.g., encoder 100 for the adaptive search range process.

The motion estimation method may be performed on a stream of video signals that include a plurality of frames, where each frame is divided to a plurality of macro blocks.

The method may include choosing, prior to performing a motion estimation algorithm for a particular macro block in a currently-coded picture, an adaptive search area within a reference picture based on motion vectors and search areas of one or more previously coded macro blocks located spatially adjacent to the currently-coded macro block and further based on the search area of a co-positioned macro block in a reference picture that is located at the same location in the reference picture as the location of the current block in a current picture. Therefore, adapting the search area for a particular macro block may be based on both a spatial-based previous knowledge and on temporal based previous knowledge.

The calculation may result in various options including, for example, using the initial default reference box as the chosen search area for the currently-coded macro block, shifting the reference box vertically and/or horizontally while the total area of the reference box remains as the default value and reducing the size of the search area and shifting the reference box in at least one direction.

Referring to the illustration of Fig. 2, the search area for determining the motion vector of macro block 211 may be calculated based on data from previously-coded macro blocks 201, 212 and 213. Although, Fig. 2 demonstrates using data from a left and top macro block neighbors, it should be understood to a person skilled in the art that embodiments of the invention are likewise applicable when using any other number of one or more macro blocks contiguous, adjacent or neighboring to the currently-coded macro block.

According to embodiments of the invention, dynamically choosing the specific parameters for the search area of a currently-coded block may be performed according to an exemplary process detailed below. Firstly, the method may include identifying previously coded left and upper macro blocks in the currently-coded frame and a co-positioned block in the reference frame. Then, the values of the search range parameter DSR top associated with the previously coded macro blocks may be compared to each other and the largest value is assigned as a new value for the search range parameter DSR top of the currently-coded macro block. Similarly, new values may be assigned to the remaining search range parameters of the search area, namely to DSR bottom, DSR left and DSR right based on data associated with the previously coded macro blocks (box 410).

It is checked whether the newly assigned values are different from the parameters of the co-positioned reference macro block, DSR top_ref, DSR bottom_ref, DSR left_ref and DSR right_ref (question block 420). If the newly assigned values of the search area, used to find the motion vector of the current macro block, are identical to the parameters of the co-positioned reference macro block located in a previous frame as at the same location as the current block in the current frame, the search area is determined to be the search area used to find the motion vector of the co-positioned reference macro block (box 430).

If at least one of newly assigned values of the search area used to find the motion vector of the current macro block, is different from a respective parameter of the co-positioned reference macro block, that newly assigned value may be increased, if desired. For example, if a newly assigned value of one of the search range parameters, DSR bottom differs from a respective value associated with the co-positioned reference frame DSR bottom_ref, the newly assigned value DSR bottom may be increased by a predefined number of pixels, for example, 4 pixels to equal "DSR bottom + 4" provided that the new value would not exceed the maximal value of MAX_SR (box 430). It should be understood to a person skilled in the art that the use of 4 pixels in each direction is merely an example, and any number of pixels in any direction may be used to enlarge the search range, if desired.

A situation in which at least one of the parameters defining the search area of the current macro block is different from a respective parameter defining the search area of a corresponding macro block located at the same spatial location in a previous or reference frame may indicate that there might be a distinct change between a current frame and a previous frame. The enlargement of the search range for the currently coded macro block may ensure that such a change would be covered by a larger search area for determining the motion vector of the current macro block.

Next, the method may include performing a validity check (box 440) as an edge of the reference box cannot exceed the predetermined maximal length of MAX_SR+16. Accordingly both the horizontal search range and the vertical search range should not exceed MAX_SR. According to embodiments of the invention, if the sum of values of the vertical parameters DSR top, DSR bottom exceeds the predetermined value, at least one of these parameters should be updated to ensure that the sum would be the maximal value MAX_SR. The method may include comparing between the two vertical parameters. If the two parameters are equal, both vertical parameters may be updated to receive the same value of MAX_SR/2, which is half the predetermined maximum value. If the two parameters are not equal, a higher priority is given to the larger parameter indicating a larger motion in its respective direction. In this case, only the smaller parameter may be updated by decreasing its value so as to ensure that the maximal length condition would not be violated. This may result in shifting the location of the search area to a direction that is estimated to be the motion direction.

Likewise, according to embodiments of the invention, if the sum of values of the horizontal parameters DSR left, DSR right exceeds the predetermined value, at least one of these parameters should be updated to ensure that the sum would be the maximal value MAX_SR. The method may include comparing between the two horizontal parameters. If the two parameters are equal, both horizontal parameters may be updated to receive the same value of MAX_SR/2. If the two parameters are not equal, a higher priority is given to the larger parameter indicating a larger motion in its respective direction. In this case, only the smaller parameter may be updated by decreasing its value so as to ensure that the maximal length condition would not be violated. This may result in shifting the location of the search area to a direction that is estimated to be the motion direction.

Further, the method may include checking whether the calculated new search area is not smaller than a predetermined value (question block 450). If the calculated search area is found to be equal to or larger than the predetermined value, the calculated direction parameters are used to define the search area in the reference picture for motion estimation of the currently coded macro block (box 460).

According to some embodiments, if the calculated search area is found to be smaller than desired, the method may include fine-tuning the calculated parameters to enlarge the search area (box 470). Accordingly, both the vertical and horizontal parameters may be increased, if desired. For example, if the sum of values of the vertical parameters DSR top, DSR bottom is smaller than a threshold value such as, for example, "MAx_SR-8", each vertical parameter may be increased by 2 pixels. As will be understood to a person skilled in the art, embodiments of the invention are likewise applicable with any other suitable values. Similarly, if the sum of values of the horizontal parameters DSR left, DSR right is smaller than a threshold value such as, for example, "MAx_SR-4" , each horizontal parameter may be increased by a single pixel. As will be understood to a person skilled in the art, embodiments of the invention are likewise applicable with any other suitable values. The fine-tuning process may be performed iteratively in a plurality of steps.

An exemplary algorithm implementing methods according to embodiments of the present invention may include code having the following format. The indication "_ref represents a co-positioned reference macro block located at the same location in the reference frame as the currently coded macro block in a current frame, for example, macro block 301. The indication "_left" represents a macro block located on the left side of the current macro block, for example, macro block 212 and the indication "_up" represents a macro block located above the current macro block, for example, macro block 213.

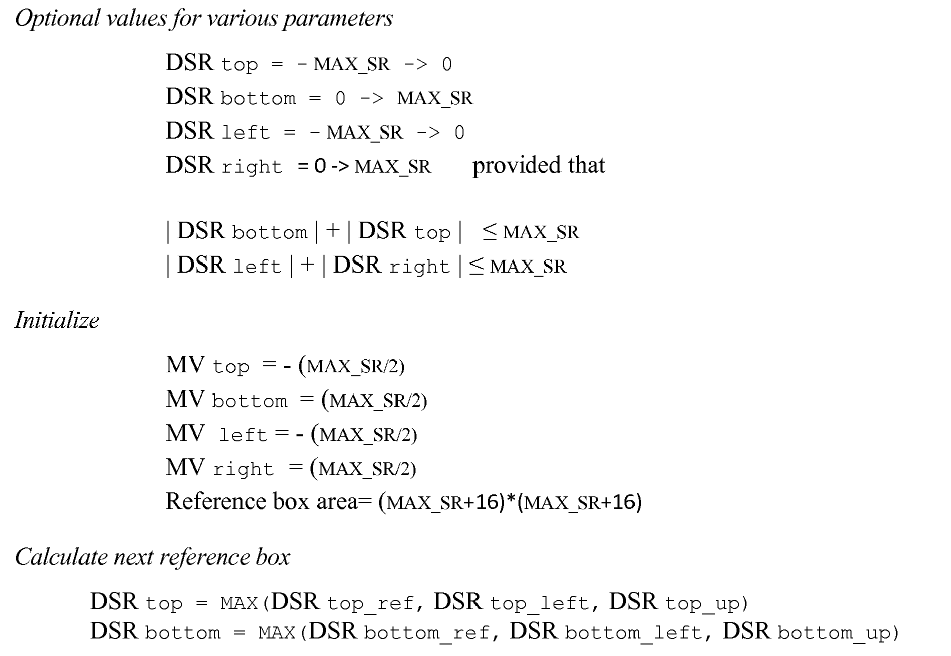

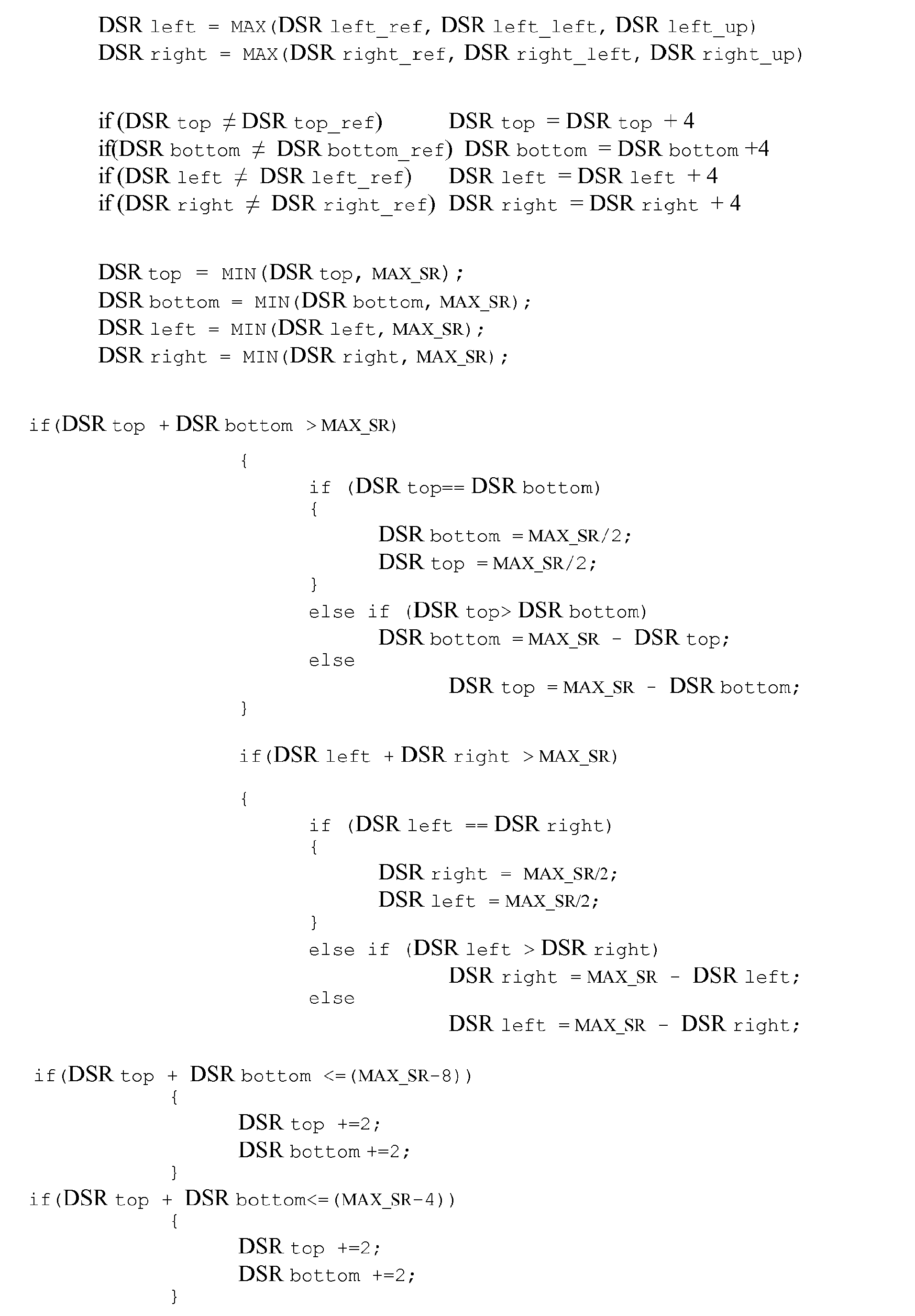

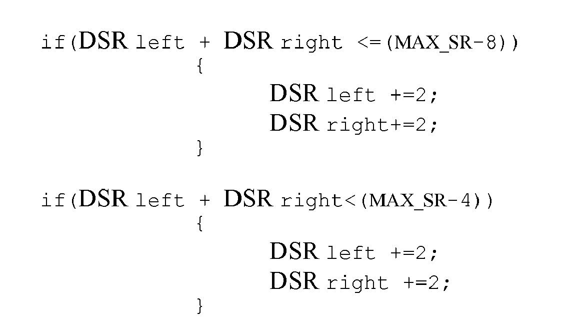

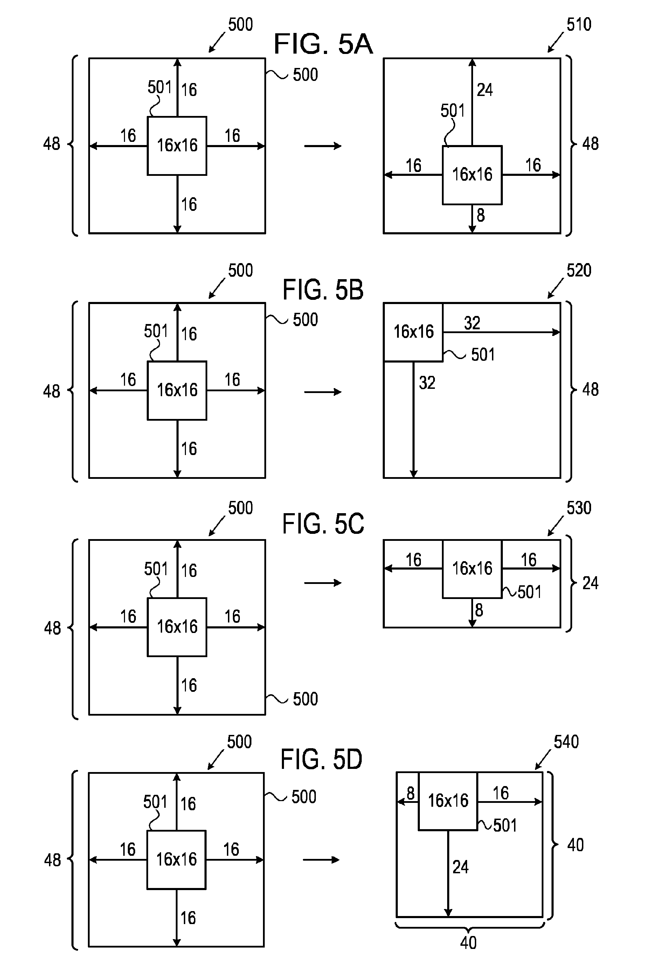

Reference is now made to Figures. 5A-5D, which illustrate results of exemplary search area calculations performed according to embodiments of the present invention. The calculation started with a default reference box or search area 500 having an area size of 48x48 pixels and a co-positioned macro block 501 centered inside default reference box 500. Accordingly, the initial values for the search range parameters are 16 pixels for each search range parameter, the maximal length the vertical and horizontal direction of the search motion is 32 pixels (MAX_SR = 32) and the initial area size of the search area is 48x48.

Fig. 5A illustrates an adapted search area that was calculated according to embodiments of the invention. The adapted search area has a reference box 510 having an area size of 48x48 pixels. The size of the reference box has not been adapted in the calculation. Co-positioned macro block 501, however, is no longer centered within the box and accordingly the search for the best matching macro block within the reference picture can be extended in the upper direction on the expense of decreasing the range of searching in the lower direction. As illustrated, the maximal possible motion vector size is now 24.

Fig. 5B illustrates another adapted search area that was calculated according to embodiments of the invention. The adapted search area has a reference box 520 having an area size of 48x48 pixels. The size of the reference box has not been adapted in the calculation. Co-positioned reference macro block 501 is positioned, however, at the left top corner of the reference box and accordingly the search for the best matching macro block within the reference picture can be extended to the right and downwards and no search is enabled upwards and to the left. As illustrated, the maximal possible motion vector size is now 32.

Fig. 5C illustrates another adapted search area that was calculated according to embodiments of the invention. The adapted search area has a reference box 530 having an area size of 48x48 pixels. The size of the reference box has been decreased in the calculation reducing the bandwidth relative to the default reference box by approximately 50%. In this case, co-positioned reference macro block 501 is positioned, at the center of the edge of the reference box and accordingly the search for the best matching macro block within the reference picture was limited in the vertical direction.

Fig. 5D illustrates another adapted search area that was calculated according to embodiments of the invention. The adapted search area has a reference box 540 having an area size of 48x48 pixels. The size of the reference box has been reduce in the calculation relative to the default reference box and further the range for searching the best matching macro block within the reference picture was extended in the lower direction on the expense of not allowing searching in the upper direction. As illustrated, the maximal possible motion vector size is now 24 and the size of the reference box is 40x40 pixels.

Embodiments of the invention may include an article such as a computer or processor readable medium, or a computer or processor storage medium, such as for example a memory, a disk drive, or a USB flash memory, encoding, including or storing instructions, e.g., computer-executable instructions, which when executed by a processor or controller, carry out methods disclosed herein.

Embodiments of the invention may include components such as, but not limited to, a plurality of central processing units (CPU) or any other suitable multi-purpose or specific processors or controllers, a plurality of input units, a plurality of output units, a plurality of memory units, and a plurality of storage units. Such system may additionally include other suitable hardware components and/or software components. In some embodiments, such system may include or may be, for example, a personal computer, a desktop computer, a mobile computer, a laptop computer, a notebook computer, a terminal, a workstation, a server computer, a Personal Digital Assistant (PDA) device, a tablet computer, a network device, or any other suitable computing device.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

## Claims

1. A method for dynamically defining search areas during motion estimation in a video encoding device, the method comprising:
receiving a sequence of pictures, each comprising a plurality of digital data blocks; and
defining for a currently-coded data block of a currently coded-picture, a search area within a previously-coded reference picture based on one or more search areas associated with previously-coded data blocks of the currently-coded picture and on a search area associated with a previously-coded data block of the reference picture that is co-positioned with the currently coded data block.

2. The method of claim 1, wherein a first one of the previously-coded data blocks of the currently-coded picture is located on a left side of the currently-coded data block and a second one of the previously-coded data blocks of the currently-coded picture is located above the currently-coded data block.

3. The method of either of claims 1 and 2, wherein defining the search area comprises:
positioning the search area within the reference picture relative to the previously-coded data block that is co-positioned with the currently-coded data block based on motion vectors of the previously-coded data blocks such that the search area is offset toward the direction of motion of the previously-coded data blocks.

4. The method of any preceding claim, wherein defining the search area comprises:
defining a default search area by four directional search range parameters, two vertical search range parameters being an upper search range parameter and a lower search range parameter and two horizontal search range parameters being a left search range parameter and a right search range parameter; and
defining the search area within the reference picture associated with the currently-coded data block to be smaller than the default search area, wherein at least one the directional search range parameters of the search area is larger than the corresponding directional search range parameter of the default search area and an opposite directional search range parameter of the search area is smaller than the corresponding opposite directional search range parameter of the default search area.

5. The method of any preceding claim, wherein each of the search areas is defined by four directional search range parameters, two vertical search range parameters being an upper search range parameter and a lower search range parameter and two horizontal search range parameters being a left search range parameter and a right search range parameter and defining the search area associated with the currently-coded data block comprises:
for each directional search range parameter of the search area associated with the currently-coded data block, selecting the largest value from corresponding directional search range parameters of the search areas associated with the previously-coded data blocks of the currently-coded picture and with the previously-coded data block of the reference picture that is co-positioned with the currently coded data block; and
increase the value of at least one of directional search range parameters of the search area associated with the currently-coded data block by a predetermined number of pixels, if the largest value chosen for the respective the directional search range parameter is different from the corresponding directional search range parameter of the search area associated with the previously-coded data block of the reference picture that is co-positioned with the currently coded data block located in the second frame at a location the first macro-block located in the first frame.

6. The method of claim 5, wherein the sum of the values of the vertical search range parameters defines the vertical search range and defining the search range further comprises:
comparing the vertical search range of the search area associated with the currently-coded data block to a predetermined maximal value; and
if the vertical search range is larger than the predetermined maximal value, updating the vertical search range parameters of the search area associated with the currently-coded data such that:
if the values of the vertical search range parameters of the search area associated with the currently-coded data block are equal, assigning each of the vertical search range parameters of the search area associated with the currently-coded data block a value equal to half the predetermined maximal value; and
if the values of the vertical search range parameters of the search area associated with the currently-coded data block are not equal, decreasing only the smaller one of the vertical search range parameters such that the vertical search range would not exceed the predetermined maximal value.

7. The method of either of claims 5 and 6, wherein the sum of the values of the horizontal search range parameters defines the horizontal search range and defining the search range further comprises:
comparing the horizontal search range of the search area associated with the currently-coded data block to a predetermined maximal value; and
if the horizontal search range is larger than the predetermined maximal value, updating the horizontal search range parameters of the search area associated with the currently-coded data such that:
if the values of the horizontal search range parameters of the search area associated with the currently-coded data block are equal, assigning each of the horizontal search range parameters of the search area associated with the currently-coded data block a value equal to half the predetermined maximal value; and
if the values of the horizontal search range parameters of the search area associated with the currently-coded data block are not equal, decreasing only the smaller one of the horizontal search range parameters such that the horizontal search range would not exceed the predetermined maximal value.

8. The method of any of claims 5 to 7, wherein defining the search range further comprises:
comparing the sum of the values of the horizontal search range parameters of the search area associated with the currently-coded data block to a predetermined maximal value; and
if the sum is larger than the predetermined value, updating the horizontal search range parameters of the search area associated with the currently-coded data such that:
if the values of the horizontal search range parameters of the search area associated with the currently-coded data block are equal, assigning each of the horizontal search range parameters of the search area associated with the currently-coded data block a value equal to half the predetermined value; and
if the values of the horizontal search range parameters of the search area associated with the currently-coded data block are not equal, decreasing only the smaller one of the horizontal search range parameters such that the sum of the horizontal search range parameters would not exceed the predetermined value.

9. The method of claim 6, wherein defining the search range further comprises:
increasing at least one of the vertical search range parameters by a predetermined number of pixels, if the vertical search range is smaller than a predetermined minimal value.

10. The method of claim 7 wherein defining the search range further comprises:
increasing at least one of the horizontal search range parameters by a predetermined number of pixels, if the horizontal search range is smaller than a predetermined minimal value.

11. An apparatus for encoding a sequence of pictures, the apparatus comprising:
a motion estimator to receive a sequence of pictures, each comprising a plurality of digital data blocks;
a memory to store a previously coded reference picture; and
a dynamic search range unit to define for a currently-coded data block of a currently coded-picture, a search area within the previously-coded reference picture, based on one or more search areas associated with previously-coded data blocks of the currently-coded picture and on a search area associated with a previously-coded data block of the reference picture that is co-positioned with the currently coded data block.

12. The apparatus of claim 11, wherein the dynamic search range unit calculates directional search range parameters defining the search area for the currently-coded data block of the currently coded-picture and sends the directional search range parameters to the motion estimator.

13. The apparatus of claim 11, wherein for each currently-coded data block, the dynamic search range unit calculates directional search range parameters defining the search area within a respective reference picture in real-time.

14. An apparatus comprising means arranged to implement a method as claims in any of claims 1 to 10.

15. Machine readable storing instructions arranged when executed to implement a method as claimed in any of claims 1 to 10.
